# EUROPÄISCHE PATENTSCHRIFT

(11) **EP 2 876 214 B1**
(45) Veröffentlichungstag und Bekanntmachung des Hinweises auf die Patenterteilung: **18.10.2017**
(21) Anmeldenummer: 14194092.4
(22) Anmeldetag: 20.11.2014
(51) Int. Cl.: E02B 8/08, A01K 79/00

(54) **Transportschnecke für den Transport von aquatischen Tieren**
Transport screw for the transport of aquatic animals
Vis transporteuse pour le transport d'animaux aquatiques

(30) Priorität: 21.11.2013 AT 507712013
(43) Veröffentlichungstag der Anmeldung: 27.05.2015
(73) Patentinhaber: Albrecht, Walter, 3283 St. Anton/Jeßnitz (AT)
(72) Erfinder: Albrecht, Walter, 3283 St. Anton/Jeßnitz (AT)
(74) Vertreter: Müllner, Martin

(56) Entgegenhaltungen:
- WO-A1-95/15079
- AT-A4- 509 209
- DE-A1- 19 630 263

## Beschreibung

### Technisches Gebiet

Die Erfindung betrifft eine Transportschnecke für den Transport von aquatischen Tieren, wie Fischen und dergleichen, von einem tiefer liegenden Unterwasser zu einem höher liegenden Oberwasser umfassend ein, um eine Achse drehbar gelagertes, Trägerrohr, welches an seinem Innenumfang eine zumindest eingängige Förderschnecke aufweist, wobei von Blattabschnitten der Förderschnecke und der Innenwandung des Trägerrohrs entlang der Länge der Transportschnecke jeweils einzelne Kammern begrenzt werden, in welchen das Wasser bei Drehung der Transportschnecke nach oben transportierbar ist, und wobei zumindest im unteren Endabschnitt der Transportschnecke die Blatthöhe der Förderschnecke in radialer Richtung geringer ist als der Radius des Innendurchmessers des Trägerrohrs, sodass um die Drehachse eine lichte Weite vorhanden ist.

### Stand der Technik

Derartige Transportschnecken, welche auch als Archimedische Schraube bekannt sind, werden seit langem zum Transport verschiedener Flüssigkeiten, Schüttgüter oder dergleichen eingesetzt. Auch zum schonenden Umladen von Lebendfischen, beispielsweise in oder aus Transporttanks, finden derartige Transportschnecken Ihre Verwendung. Sie können auch als ein besonders kostengünstiger "Fischlift" beim Kraftwerksbau eingesetzt werden, wie dies beispielsweise in der AT 509209 A beschrieben ist. Durch den Einsatz einer Transportschnecke können hierbei aufwändige Anlagen, wie separate Fischtreppen etc. vermieden werden.

Beim Einbau als "Fischlift" zeigte sich in der Praxis, dass eine ausreichend große Lockströmung vorhanden sein muss, damit die Fische selbständig in den Einzug am unteren Ende der Transportschnecke gelangen. Eine einfache Transportschnecke bietet diese Lockströmung nicht, da in den Kammern der Schnecke Wasser nach oben transportiert wird und damit eine Strömung zu der Schnecke hin vorherrscht. Da Fische sich prinzipiell gegen eine Strömung ausrichten, gelangen sie entweder gar nicht zum Einzug oder werden bestenfalls in falscher Schwimmrichtung erfasst und nach oben transportiert. Wenn der Fisch mit dem Schwanz voran in die Schnecke gezogen wird, kann dies zu Verletzungen führen, was ebenfalls nicht wünschenswert ist. Ähnliche Probleme mit falsch orientierten Fischen treten auch auf, wenn die Lockströmung separat neben der Transportschnecke eingerichtet wird. Dabei schwimmen die Fische dann auf die Strömung zu und werden dann seitlich von der Transportschnecke erfasst, was ebenfalls zu einer undefinierten Ausrichtung während des Transports in der Schnecke und zu erhöhter Verletzungsgefahr führt.

Die WO 95/15079 zeigt eine Transportschnecke gemäss dem Oberbegriff des Anspruchs 1, welche am unteren Ende der Schnecke ein geweitetes Trägerrohr aufweist, welches im weiteren Verlauf über einen sich verjüngenden konischen Abschnitt an ein Trägerrohr mit geringerem Durchmesser anschließt. Ein einzelner Schneckengang transportiert dabei das Wasser nach oben, wobei im Einlaufbereich durch den geweiteten Abschnitt mehr Volumen aufgenommen wird, als im schmäleren Durchmesser des restlichen Trägerrohrs abtransportiert werden kann. Durch Schlitze in einem zentral eingesetzten Rohr wird das überschüssige Wasser als Lockströmung nach unten abgeführt. Nachteilig bei dieser Ausführungsform ist, dass die Fertigung und Lagerung des Trägerrohrs sowie des Schneckengangs aufgrund der unterschiedlichen und sich ändernden Durchmesser aufwändig und damit teuer ist. Auch können die Schlitze zum Abführen des Wassers der Lockströmung leicht durch Treibgut verlegt werden, was die Anordnung wartungsanfällig macht.

### Kurzbeschreibung der Erfindung

Es ist folglich Aufgabe der vorliegenden Erfindung, eine Transportschnecke zu schaffen, welche die oben genannten Nachteile beseitig und am Einzug im Unterwasser eine ausreichend starke Lockströmung bietet, wodurch die Fische in richtiger Orientierung in die Transportschnecke geleitet werden und in Folge schonend und effizient ins Oberwasser transportiert werden können.

Diese Aufgabe wird dadurch gelöst, dass zumindest im unteren Viertel der Transportschnecke ein zweiter Schneckengang vorgesehen ist, wodurch in dem betreffenden Abschnitt doppelt so viele Kammern ausgebildet werden, als in der restlichen Transportschnecke, sodass am innenliegenden Ende des zweiten Schneckenganges im Trägerrohr jeweils nur mehr das einfache Kammervolumen weitertransportierbar ist, während das restliche Volumen über die lichte Weite in der Mitte der Transportschnecke wieder zurückfließt und die Lockströmung ausbildet. Durch entsprechende Ausbildung und Anordnung der Förderschnecke ist das Gesamtvolumen gebildet aus den Volumina der einzelnen Kammern der unteren Hälfte der Transportschnecke größer als jenes der oberen Hälfte. Dadurch, dass im unteren Abschnitt der Transportschnecke mehr Wasser nach oben transportiert wird, als die Kammervolumina im oberen Abschnitt der Transportschnecke aufnehmen können, kommt es an einem gewissen Punkte innerhalb der Schnecke zu einem Überlaufen der Kammern und das überschüssige Wasservolumen fließt über die lichte Weite in der Mitte der Schnecke wieder retour zum Einzug und bilden dort, genau mittig von der Transportschnecke ausgehend, eine Lockströmung.

Gemäß einer möglichen Ausführungsform ist es vorgesehen, dass die Blatthöhe der Förderschnecke in radialer Richtung zumindest im unteren Drittel der Förderschnecke höher ist als im verbleibenden Schneckenabschnitt. Bevorzugt ist es ein Merkmal dieser Ausführungsform, dass die Blatthöhe der Förderschnecke mit jeder Schneckenwindung in Richtung des oberen Endes der Transportschnecke abnimmt. Durch die Abnahme der Blatthöhe bei jeder Windung der Förderschnecke, nimmt auch das einzelne Kammervolumen mit jeder Windung ab und es kommt zu einem kontinuierlichen Überlaufen des Wassers in die lichte Weite entlang der Drehachse der Schnecke. Am unteren Ende, wo die lichte Weite am geringsten ist und sich das gesamte Wasser der einzelnen überlaufenden Kammern akkumuliert, bildet sich eine entsprechend starke Lockströmung aus. Je nach Winkel der Anlage bzw. gewünschten Parametern für die Lockströmung, kann die Blatthöhe der Förderschnecke entsprechend ausgestaltet werden.

Schließlich ist eine weitere alternative Ausführungsform der Erfindung dadurch gekennzeichnet, dass zumindest im unteren Viertel der Transportschnecke ein axial angeordnetes zu beiden Seiten offenes Rohr angeordnet ist, welches mit seinem Außenumfang mit dem Blatt der Förderschnecke verbunden ist. In einer bevorzugten Ausführungsform dieser Variante ist es vorgesehen, dass das Rohr einen Radius aufweist, welcher in etwa dem halben Radius des Innenradius des Trägerrohrs entspricht. Bei einer normal ausgebildeten Kammer innerhalb der Schnecke, wird das Volumen der Kammer durch den jeweils tiefsten Punkt der Blatthöhe betrachtet in waagrechter Richtung begrenzt, da ab diesem Punkt das in der Kammer befindliche Wasser überläuft. Durch das Anordnen eines inneren Rohres welches mit der Förderschnecke verbunden ist, wird das Kammervolumen erhöht, da die einzelnen Kammern an den Blattoberkanten von dem Rohr begrenzt sind und die Füllhöhe somit deutlich über die Mittelachse der Transportschnecke hinweg erhöht werden kann. Am inneren Ende des eingesetzten Rohrs kommt es dann zu einem Überlaufen des Wassers in das Rohr und es wird somit am unteren Ende des Rohrs eine Lockströmung erzeugt.

Ein weiteres Merkmal der vorliegenden Erfindung ist es, dass ein Zuleitungsrohr vorgesehen ist, welches axial in der lichten Weite zumindest in der oberen Hälfte der Transportschnecke axial angeordnet ist, wobei das Zuleitungsrohr zum Einleiten von Wasser in Richtung Unterwasser dient. Sollte aus bestimmten baulichen Gründen eine besonders starke Lockströmung notwendig sein, so kann zusätzlich zu den bereits genannten Maßnahmen ein Zuleitungsrohr von oben in die Transportschnecke eingesetzt werden und Wasser vom Oberwasser eingeleitet werden, wodurch je nach Druck des zugeleiteten Wassers die Lockströmung entsprechend weiter erhöht werden kann.

### Kurze Beschreibung der Zeichnungsfiguren

Die Erfindung wird nun anhand der beiliegenden Zeichnungen näher erläutert wobei,
Fig. 1 einen schematischen Längsschnitt durch eine mögliche Ausführungsform der Erfindung zeigt,
Fig. 2 einen schematischen Längsschnitt durch eine alternative Ausführungsform der Erfindung zeigt,
Fig. 3 einen schematischen Längsschnitt durch eine Transportschnecke mit axial angeordnetem Rohr zeigt und
Fig. 4 einen schematischen Längsschnitt durch eine Transportschnecke mit eingesetztem Zuleitungsrohr zeigt.

### Beschreibung der Ausführungsarten

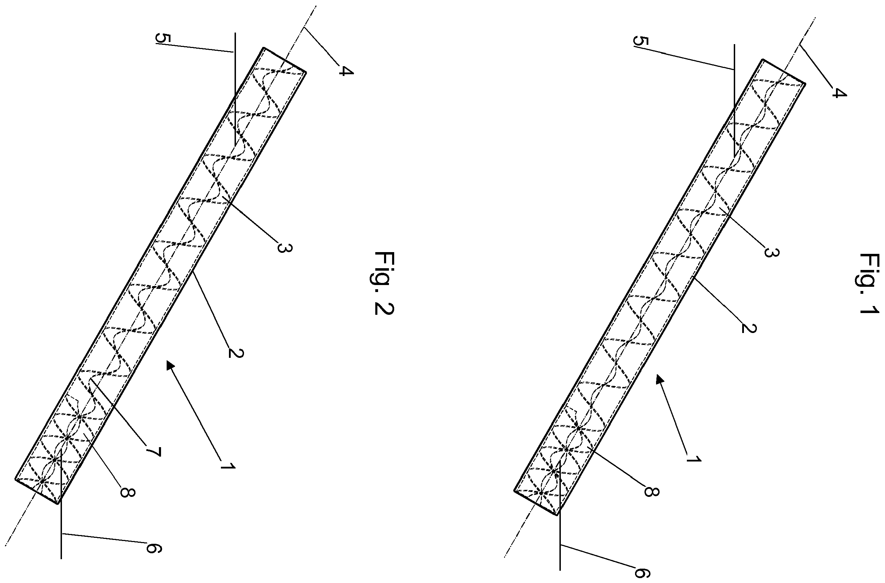

Die in Fig. 1 dargestellte Transportschnecke 1 ist für den Betrieb schräg zwischen einem Oberwasser 5 und Unterwasser 6 angeordnet. Im Inneren des über eine Drehachse 4 drehbar gelagerten Trägerrohrs 2 befindet sich eine Förderschnecke 3, welche Wasser vom Unterwasser 6 aufnimmt und über einzelne Kammern nach oben zum Oberwasser 5 fördert. Die Kammern werden dabei durch die Innenwandung des Trägerrohrs 2 sowie von Blattabschnitten der Förderschnecke 3 gebildet. Der Normalabstand der Blattoberkante 7 der Förderschnecke 3 zur Innenwand des Trägerrohrs 2 bildet die Blatthöhe. Die Blatthöhe der Förderschnecke 3 ist bei dieser Ausführungsform über die gesamte Länge der Transportschnecke 1 konstant, und am unteren Ende wurde ein zweiter Schneckengang 8 vorgesehen. Durch die zusätzlichen Kammern kann mehr Wasservolumen aus dem Unterwasser aufgenommen werden, welches am Ende des zweiten Schneckengangs 8 zur Mitte hin überläuft und am unteren Ende der Schnecke als Lockströmung wieder austritt.

Die Ausführungsform in Fig. 2 zeigt eine Transportschnecke 1, welche die Merkmale der Ausführungsform aus Fig. 1 aufweist, jedoch nimmt die Blatthöhe vom unteren Ende der Transportschnecke 1 zum oberen Ende hin ab, wodurch auch das von den einzelnen Kammern aufnehmbare Volumen abnimmt. Beim Transport des Wassers kommt es also zu einem Überschwappen des Wassers nach unten, wobei die akkumulierten Wasservolumina durch die um die Drehachse vorhandene lichte Weite am unteren Ende der Transportschnecke austreten. Einerseits variiert die Blatthöhe über die gesamte Länge der Transportschnecke 1, wobei am unteren Ende die Blatthöhe der Förderschnecke 3 am höchsten ist und dann kontinuierlich abnimmt. Zum anderen wurde ein zweiter Schneckengang 8 vorgesehen, welcher zusätzliche Kammervolumina schafft. Durch diese Ausführungsform kann eine umso stärkere Lockströmung erzielt werden.

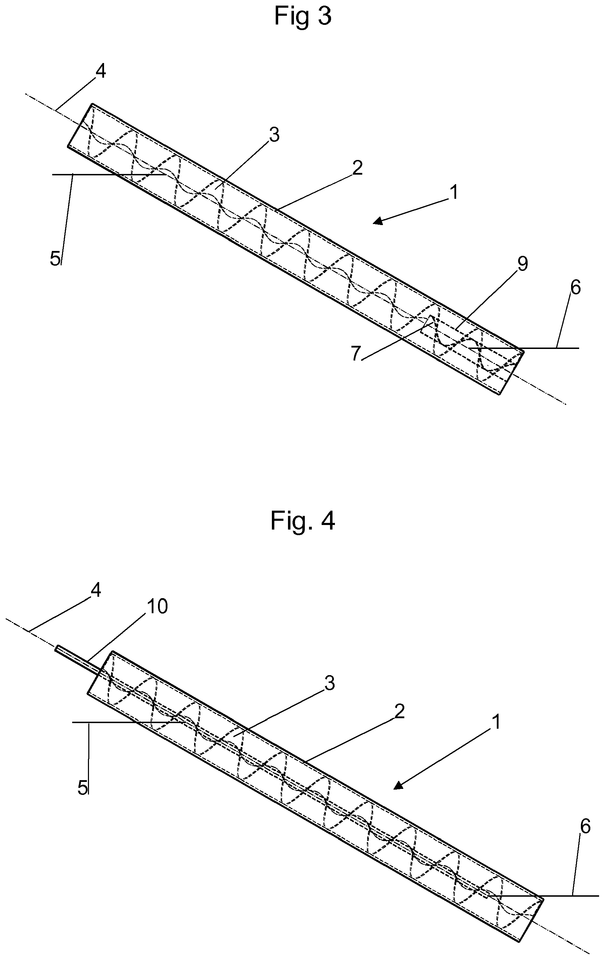

Fig. 3 zeigt eine weitere Ausführungsform einer erfindungsgemäßen Transportschnecke 1, welche an ihrem unteren Ende ein eingesetztes Rohr 9 aufweist. Der zweiter Schneckengang 8 wirde zur besseren Sichtbarkeit des eingesetzten Rohrs 9 nicht eingezeichnet. Die Oberkante 7 der Blattabschnitte der Förderschnecke 3 im Bereich des Rohrs 9 befindet sich an der Außenseite des Rohrs 9. Im gezeigten Beispiel ist der Radius des Rohrs 9 etwa halb so groß wie der Innenradius des Trägerrohrs 2. Durch diese zusätzliche Begrenzung der einzelnen Kammern durch das Rohr 9 ist das Kammervolumen deutlich höher, da das Wasser bis über die Drehachse 4 hinaus angestaut wird. Am Ende des Rohrs 9 läuft das überschüssige Wasservolumen dann durch das Rohr 9 zum unteren Ende hin ab und bildet somit die Lockströmung.

Fig. 4 zeigt ein Zuleitungsrohr 10, welches zusätzlich zu den genannten Merkmalen in der lichten Weite bei der Drehachse 4 einer Transportschnecke 1 angeordnet ist, und durch welches zusätzliches Wasser für eine Lockströmung gewünschter Stärke zugeführt werden kann. Auch in dieser Ansicht wurde der erfindungsgemäß vorgesehene zweite Schneckengang 8 nicht eingezeichnet.

## Patentansprüche

1. Transportschnecke für den Transport von aquatischen Tieren, wie Fischen und dergleichen, von einem tiefer liegenden Unterwasser (6) zu einem höher liegenden Oberwasser (5) umfassend ein, um eine Achse drehbar gelagertes, Trägerrohr (2), welches an seinem Innenumfang eine zumindest eingängige Förderschnecke (3) aufweist, wobei von Blattabschnitten der Förderschnecke (3) und der Innenwandung des Trägerrohrs (2) entlang der Länge der Transportschnecke (1) jeweils einzelne Kammern begrenzt werden, in welchen das Wasser bei Drehung der Transportschnecke (1) nach oben transportierbar ist, und wobei zumindest im unteren Endabschnitt der Transportschnecke (1) die Blatthöhe der Förderschnecke (3) in radialer Richtung geringer ist als der Radius des Innendurchmessers des Trägerrohrs (2), sodass um die Drehachse (4) eine lichte Weite vorhanden ist, **dadurch gekennzeichnet, dass** zumindest im unteren Viertel der Transportschnecke (1) ein zweiter Schneckengang (8) vorgesehen ist, wodurch in dem betreffenden Abschnitt doppelt so viele Kammern ausgebildet werden, als in der restlichen Transportschnecke (1), sodass am innenliegenden Ende des zweiten Schneckengangs (8) im Trägerrohr (2) jeweils nur mehr das einfache Kammervolumen weitertransportierbar ist, während das restliche Volumen über die lichte Weite in der Mitte der Transportschnecke zurückfließt und eine Lockströmung ausbildet.

2. Transportschnecke nach Anspruch 1, **dadurch gekennzeichnet, dass** die Blatthöhe der Förderschnecke (3) in radialer Richtung zumindest im unteren Drittel der Förderschnecke (3) höher ist als im verbleibenden Schneckenabschnitt.

3. Transportschnecke nach Anspruch 2, **dadurch gekennzeichnet, dass** die Blatthöhe der Förderschnecke (3) mit jeder Schneckenwindung in Richtung des oberen Endes der Transportschnecke (1) abnimmt.

4. Transportschnecke nach Anspruch 1, **dadurch gekennzeichnet, dass** zumindest im unteren Viertel der Transportschnecke (1) ein axial angeordnetes zu beiden Seiten offenes Rohr (9) angeordnet ist, welches mit seinem Außenumfang mit dem Blatt der Förderschnecke (3) verbunden ist.

5. Transportschnecke nach Anspruch 4, **dadurch gekennzeichnet, dass** das Rohr (9) einen Radius aufweist, welcher in etwa dem halben Radius des Innenradius des Trägerrohrs (2) entspricht.

6. Transportschnecke nach einem der Ansprüche 1 bis 5, **dadurch gekennzeichnet, dass** ein Zuleitungsrohr (10) vorgesehen ist, welches axial in der lichten Weite zumindest in der oberen Hälfte der Transportschnecke (1) axial angeordnet ist, wobei das Zuleitungsrohr (10) zum Einleiten von Wasser in Richtung Unterwasser (6) dient.

## Claims

1. A transporting screw conveyor for the transport of aquatic animals, such as fish and the like, from a lower-lying tailwater region (6) to a higher-lying headwater region (5), comprising a casing tube (2), which is rotatably mounted about an axis and has, on its inner periphery, an at least single-start screw conveyor (3), individual chambers being respectively delimited along the length of the transporting screw conveyor (1) by blade portions of the screw conveyor (3) and the inner wall of the casing tube (2), in which the water can be transported upwards when the transporting screw conveyor (1) is rotated, and, at least in the lower end region of the transporting screw conveyor (1), the blade height of the screw conveyor (3) being less in the radial direction than the radius of the inner diameter of the casing tube (2), so that a clear space exists around the axis of rotation (4), **characterized in that**, at least in the lower quarter of the transporting screw conveyor (1), a second screw start (8) is provided, whereby, in the region in question, twice as many chambers are formed as in the remainder of the transporting screw conveyor (1), so that at the inwardly-located end of the second start (8) in the casing tube (2), only the basic chamber capacity can in each case be transported further, while the remaining volume flows back by way of the clear space in the middle of the transporting screw conveyor and forms an attracting flow.

2. A transporting screw conveyor according to Claim 1, **characterized in that** the blade height of the screw conveyor (3) in the radial direction, at least in the lower third of the screw conveyor (3), is higher than in the remaining screw portion.

3. A transporting screw conveyor according to Claim 2, **characterized in that** the blade height of the screw conveyor (3) reduces for each turn of the screw in the direction of the upper end of the transporting screw conveyor (1).

4. A transporting screw conveyor according to Claim 1, **characterized in that** at least in the lower quarter of the transporting screw conveyor (1), an axially aligned tube (9) is provided, which is open at both ends, and the outer wall of which is connected to the blade of the screw conveyor (3).

5. A transporting screw conveyor according to Claim 4, **characterized in that** the tube (9) has a radius which equates to approximately one half of the radius of the inner radius of the casing tube (2).

6. A transporting screw conveyor according to any of Claims 1 to 5, **characterized in that** a feed tube (10) is provided, which is axially aligned in the clear space, at least in the upper half of the transporting screw conveyor (1), the feed tube (10) serving to introduce water in the direction of the tailwater region (6).

## Revendications

1. Vis transporteuse permettant de transporter des animaux aquatiques, tels les poisson et animaux assimilés, depuis un bief aval (6) en situation relative basse vers un bief amont (5) en situation relative haute, comprenant un tube porteur (2) qui est monté rotatif autour d'un axe et dont la circonférence intérieure est pourvue d'une vis convoyeuse (3) au moins à filet simple, chacune des parties de spire de la vis convoyeuse (3) délimitant, avec la paroi intérieure du tube porteur (2) et le long l'étendue longitudinale de la vis transporteuse (1), une chambre séparée dans laquelle l'eau peut être transportée vers le haut lorsqu'on tourne la vis transporteuse (1), et les spires de la vis convoyeuse (3) présentant, au moins dans la partie terminale inférieure de la vis transporteuse (1), une hauteur dans le sens radial qui est inférieure au rayon du diamètre intérieur du tube porteur (2), faisant en sorte qu'autour de l'axe de rotation (4), il subsiste un diamètre libre, **caractérisée en ce qu'**au moins le quart inférieur de la vis transporteuse (1) est pourvu d'un deuxième filet de vis (8), la partie concernée comportant ainsi deux fois plus de chambres que le reste de la vis transporteuse (1), faisant en sorte qu'à l'extrémité intérieure du deuxième filet de vis (8), seul un simple volume de chambre puisse continuer d'être transporté au sein du tube porteur (2) alors que le reste du volume reflue par le diamètre libre au centre de la vis transporteuse pour ainsi former un courant d'attrait.

2. Vis transporteuse selon la revendication 1, **caractérisée en ce que** les spires de la vis convoyeuse (3) présentent, au moins dans le tiers inférieure de la vis transporteuse (3), une hauteur dans le sens radial qui est supérieure par rapport à la partie restante de la vis.

3. Vis transporteuse selon la revendication 2, **caractérisée en ce que** les spires de la vis convoyeuse (3) présentent une hauteur qui diminue avec chaque tour de la vis vers l'extrémité supérieure de la vis de transport (1).

4. Vis transporteuse selon la revendication 1, **caractérisée en ce que** la vis transporteuse (1) est pourvue, au moins dans son quart inférieure, d'un tube (9) à deux bouts ouverts qui est disposé axialement et dont la circonférence extérieure est reliée à la spire de la vis convoyeuse (3).

5. Vis transporteuse selon la revendication 4, **caractérisée en ce que** le tube (9) présente un rayon correspondant approximativement à la moitié du rayon du diamètre intérieur du tube porteur (2).

6. Vis transporteuse selon l'une des revendications 1 à 5, **caractérisée en ce qu'**elle comporte une tube d'alimentation (10) qui est disposé, au moins dans la moitié supérieure de la vis transporteuse (1), axialement au sein dudit diamètre libre, le tube d'alimentation (10) permettant de faire passer de l'eau vers le bief aval (6).
